# EUROPEAN PATENT SPECIFICATION

(11) **EP 4 462 556 B1**
(45) Date of publication and mention of the grant of the patent: **09.09.2026**
(21) Application number: 22920052.2
(22) Date of filing: 22.12.2022
(51) Int. Cl.: H01M 50/176, H01M 50/188, H01M 50/557, H01M 50/566, H01M 50/567

(54) **BATTERY CELL WITH END COVER ASSEMBLY, BATTERY AND ELECTRICAL APPARATUS**
BATTERIEZELLE MIT ENDKAPPENANORDNUNG, BATTERIE UND ELEKTRISCHE VORRICHTUNG
ÉLÉMENT DE BATTERIE AVEC ENSEMBLE COUVERCLE D'EXTRÉMITÉ, BATTERIE ET APPAREIL ÉLECTRIQUE

(30) Priority: 14.01.2022 CN 202210043499
(43) Date of publication of application: 13.11.2024
(73) Proprietor: Contemporary Amperex Technology Co., Limited, Ningde, Fujian 352100 (CN)
(72) Inventor: ZHENG, Shixiong, NINGDE, Fujian 352100 (CN); ZHAO, Bin, NINGDE, Fujian 352100 (CN); YU, Dingshan, NINGDE, Fujian 352100 (CN); QI, Congcheng, NINGDE, Fujian 352100 (CN); DU, Hang, NINGDE, Fujian 352100 (CN); LI, Pengfei, NINGDE, Fujian 352100 (CN); LI, Yingjun, NINGDE, Fujian 352100 (CN)
(74) Representative: Gong, Jinping
(86) International application number: PCT/CN2022/141122
(87) International publication number: WO 2023/134422

(56) References cited:
- EP-A1- 3 723 153
- EP-A1- 3 734 687
- WO-A1-2018/099094
- CN-A- 108 365 138
- CN-A- 108 428 823
- CN-A- 111 599 953
- CN-A- 111 599 953
- CN-U- 208 690 318
- US-A1- 2015 194 644
- US-A1- 2020 350 550

## Description

### CROSS-REFERENCE TO RELATED APPLICATIONS

This application refers to Chinese Patent Application No. 202210043499.9, filed on January 14, 2022 and entitled "END COVER ASSEMBLY, BATTERY CELL, BATTERY, AND ELECTRIC APPARATUS".

### TECHNICAL FIELD

This application relates to the field of battery technologies, and in particular, to a battery cell as specified in any of claims 1-8, a battery as specified in claim 9, and an electric apparatus as specified in claim 10.

### BACKGROUND

This section provides only background information, which is not necessarily prior art, related to this application.

As the smallest unit that constitutes a battery, a battery cell includes an end cover, a housing, an electrode assembly, and other functional components. The end cover covers an opening of the housing to isolate an internal environment of the battery cell from an external environment, and the end cover may be provided with functional components such as an electrode terminal. The electrode terminal generally runs through a through-hole provided in the end cover and is electrically connected to the electrode assembly. Additionally, an electrolyte is contained inside the battery cell, and to prevent electrolyte leakage, a sealing member needs to be provided for sealing between the end cover and the electrode terminal. The sealing between the end cover and the electrode terminal is an important key to ensure battery safety. Therefore, in some cases, solidified plastic is often used to fix the electrode terminal and the end cover to ensure that the sealing member between them maintains a certain level of compression, thereby achieving a better sealing effect. CN 111 599 953 A discloses a prior art battery cell comprising an end cover assembly with an electrode terminal covering a lead-out hole as well as a sealing member and two fixing members for the electrode terminal.

### SUMMARY

The present invention is defined by the appended claims. An objective of embodiments of this application is to provide an end cover assembly, a battery cell, a battery, and an electric apparatus to improve sealing reliability between an electrode terminal and an end cover. Specific technical solutions are as follows.

An embodiment of a first aspect of this application provides a battery cell including: a housing with an opening; an electrode assembly accommodated in the housing; and an end cover assembly covering the opening; wherein the end cover assembly including: an end cover provided with an electrode lead-out hole; an electrode terminal, where the electrode terminal includes a terminal plate, the terminal plate is located on a side of the end cover and covers the electrode lead-out hole, and an outer peripheral surface of the terminal plate protrudes from an inner wall of the electrode lead-out hole; a sealing member at least partially disposed between the electrode terminal and the end cover; a first fixing member configured to be connected to the end cover and surround the terminal plate so as to fix the electrode terminal onto the end cover, where the first fixing member includes a first flange, the first flange extends in a direction approaching an axis of the electrode lead-out hole, and the first flange is located on a side of the terminal plate farther away from the end cover; and a heat-resistant part, at least a portion of the heat-resistant part being located between the first flange and the electrode terminal in an axial direction of the electrode lead-out hole; wherein the end cover assembly further includes a second fixing member, the second fixing member at least partially surrounds the terminal plate, and the first fixing member and the electrode terminal are separated from each other by the second fixing member; wherein a portion of the second fixing member disposed between the first flange and the terminal plate is provided with an accommodation slot, and at least a portion of the heat-resistant part is embedded in the accommodation slot; and wherein along the axial direction of the electrode lead-out hole, the accommodation slot runs through the portion of the second fixing member disposed between the first flange and the terminal plate to enable two ends of the heat-resistant part to abut against the first flange and the terminal plate, respectively.

For the end cover assembly according to the embodiment of the first aspect of this application, the sealing member is provided between the end cover and electrode terminal of the end cover assembly to seal adjacent joint surfaces of the end cover and the electrode terminal, and the end cover of the end cover assembly is connected to the first fixing member surrounding the terminal plate so as to fix the electrode terminal onto the end cover. The first fixing member includes the first flange located on a side of the terminal plate farther away from the end cover, and the heat-resistant part is provided between the first flange and the electrode terminal in the axial direction of the electrode lead-out hole. The heat-resistant part is structurally less prone to damage and undergoes small changes in shape and size under heat conditions below its maximum heat-resistant temperature, and the first fixing member and the end cover are fixed in positions once connected. Therefore, the first flange is always spaced apart from the terminal plate by at least the thickness of the heat-resistant part; that is, the heat-resistant part restricts the distance that the terminal plate can move in the direction approaching the first flange. In this way, a mating position between the electrode terminal and the end cover can be kept unchanged as much as possible, making the fixing effect of the first fixing member on the electrode terminal and the end cover more reliable, reducing variations in the level of compression of the sealing member, and thereby improving the sealing reliability between the electrode terminal and the end cover.

In some embodiments of this application, the heat-resistant part is resistant to a temperature of at least 300°C without deformation. Generally, if the electrode terminal generates heat in processes such as welding and formation, temperatures on the surface of the electrode terminal and in the surrounding environment are between 200°C and 300°C. The selection and use of a heat-resistant part that is resistant to a temperature of at least 300°C without deformation can better limit the distance that the terminal plate moves in the direction approaching the first flange with higher reliability, thereby further guaranteeing the sealing between the electrode terminal and the end cover.

In some embodiments of this application, the heat-resistant part is made of at least one or more of the following materials: ceramics, polybenzimidazole, and polyimide. Regardless of whether the heat-resistant part is made of any one or more of ceramics, polybenzimidazole, and polyimide, the heat-resistant part can satisfy the application requirement of low deformation in temperature rising scenarios, and is disposed between the first flange and the terminal plate to limit the distance that the terminal plate moves in the direction approaching the first flange, reducing the influence of the temperature rise on the position of the electrode terminal, reducing variations in the level of compression of the sealing member, and thereby improving the sealing reliability between the electrode terminal and the end cover. In addition, the heat-resistant part also plays an insulating role to prevent potential safety hazards arising from electrical conduction between the electrode terminal and the first flange.

The second fixing member is disposed in such a manner that the second fixing member at least partially surrounds the terminal plate and separates the first fixing member from the electrode terminal, so that the first fixing member and the electrode terminal can be connected together to form an entirety, making them less likely to be separated from each other or loosened, thereby further strengthening the fixing effect on the electrode terminal and the end cover and improving the connection stability between the electrode terminal and the end cover.

In some embodiments of this application, the second fixing member is a heat-resistant part. In this case, the spacing between the first fixing member and the electrode terminal is more stable, allowing for a smaller range of movement of the electrode terminal in a direction approaching the first fixing member, thereby better guaranteeing the sealing reliability between the electrode terminal and the end cover.

In some embodiments of this application, the heat-resistant part and the second fixing member are disposed separately, the heat-resistant part is disposed between the first flange and the electrode terminal and the second fixing member surrounds the heat-resistant part. Since a movable direction of the electrode terminal is the axial direction of the electrode lead-out hole, the key to limiting the movement distance of the electrode terminal with respect to the first flange is to dispose the heat-resistant part between the first flange and the electrode terminal. In this case, the heat-resistant part is disposed separately from the second fixing member, and a selection range of materials for the second fixing member is wider, making it easier to connect various components. In addition, the second fixing member is disposed in a form surrounding the terminal plate and the heat-resistant part and separating the first fixing member from the electrode terminal, so that the first fixing member, the heat-resistant part, and the electrode terminal are connected to form an entirety, making them less likely to be separated from each other or loosened. This further strengthens the fixing effect on the electrode terminal and the end cover, improves the connection stability between the electrode terminal and the end cover, and better guarantees the sealing reliability between the electrode terminal and the end cover.

With the provision of the accommodation slot in the portion of the second fixing member disposed between the first flange and the terminal plate, at least a portion of the heat-resistant part is embedded in the accommodation slot, which makes it easier to use the second fixing member to surround at least a portion of the heat-resistant part, enhancing the connection stability between the heat-resistant part and the first flange and between the heat-resistant part and the terminal plate and avoiding displacement and shaking of the heat-resistant part between the first flange and the terminal plate while such displacement and shaking affect the overall structural stability.

The accommodation slot is configured as a through-hole running through the portion of the second fixing member disposed between the first flange and the terminal plate to enable the two ends of the heat-resistant part abut against the first flange and the terminal plate, respectively, so that the movable distance of the electrode terminal relative to the first flange can be further reduced, guaranteeing a better fit between the electrode terminal and the end cover, and improving the sealing reliability between the electrode terminal and the end cover.

In some embodiments of this application, the heat-resistant part is an annular structure. With the heat-resistant part configured as an annular structure, the overall movable distance of the electrode terminal relative to the first flange can remain consistent. This prevents the occurrence of misalignment of the axis of the electrode terminal, can guarantee a better fit between the electrode terminal and the end cover, and improve the sealing reliability between the electrode terminal and the end cover.

In some embodiments of this application, the heat-resistant part is provided in plurality, and the plurality of heat-resistant parts are spaced apart in a direction surrounding the axis of the electrode terminal. With the provision of the plurality of heat-resistant parts spaced apart in the direction surrounding the axis of the electrode terminal, it is possible to limit the overall movable distance of the electrode terminal relative to the first flange to remain consistent, preventing the occurrence of misalignment of the axis of the electrode terminal, so as to guarantee a better fit between the electrode terminal and the end cover and improve the sealing reliability between the electrode terminal and the end cover. In addition, the material usage of the heat-resistant part can also be reduced, thereby reducing economic costs of producing the heat-resistant part.

In some embodiments of this application, the first fixing member further includes a connection part extending in a direction leaving the terminal plate, the connection part being welded to the end cover; and the end cover assembly further includes a patch, the patch covering a weld seam formed by welding of the connection part to the end cover. With the provision of the connection part to implement the connection between the first fixing member and the end cover by welding the connection part to the end cover, it is easier to fix the position of the first fixing member. In addition, the provision of the patch over the weld seam formed by welding of the connection part to the end cover can prevent the weld seam from being exposed on the surface of the battery cell, thereby improving the aesthetics of the overall structure.

For the battery cell according to the embodiment of the first aspect of this application, a sealing member is provided between an end cover and an electrode terminal of the end cover assembly of the battery cell to seal adjacent joint surfaces of the end cover and the electrode terminal, and the end cover is connected to a first fixing member surrounding a terminal plate so as to fix the electrode terminal 1 onto the end cover. The first fixing member includes a first flange located on a side of the terminal plate farther away from the end cover, and a heat-resistant part is provided between the first flange and the electrode terminal in an axial direction of an electrode lead-out hole. The heat-resistant part is structurally less prone to damage and undergoes small changes in shape and size under heat conditions below its maximum heat-resistant temperature, and the first fixing member and the end cover are fixed in positions once connected. Therefore, the first flange is always spaced apart from the terminal plate by at least the thickness of the heat-resistant part; that is, the heat-resistant part restricts the distance that the terminal plate can move in the direction approaching the first flange. In this way, a mating position between the electrode terminal and the end cover can be kept unchanged as much as possible, making the fixing effect of the first fixing member on the electrode terminal and the end cover more reliable, reducing variations in the level of compression of the sealing member, thereby improving the sealing reliability between the electrode terminal and the end cover and better ensuring the safety of the battery cell.

An embodiment of a second aspect of this application provides a battery including the battery cell according to the embodiment of the first aspect of this application.

For the battery according to the embodiment of the second aspect of this application, in an end cover assembly of a battery cell included therein, a sealing member is provided between an end cover and an electrode terminal to seal adjacent joint surfaces of the end cover and the electrode terminal, and the end cover is connected to a first fixing member surrounding a terminal plate so as to fix the electrode terminal onto the end cover. The first fixing member includes a first flange located on a side of the terminal plate farther away from the end cover, and a heat-resistant part is provided between the first flange and the electrode terminal in an axial direction of an electrode lead-out hole. The heat-resistant part is structurally less prone to damage and undergoes small changes in shape and size under heat conditions below its maximum heat-resistant temperature, and the first fixing member and the end cover are fixed in positions once connected. Therefore, the first flange is always spaced apart from the terminal plate by at least the thickness of the heat-resistant part; that is, the heat-resistant part restricts the distance that the terminal plate can move in the direction approaching the first flange. In this way, a mating position between the electrode terminal and the end cover can be kept unchanged as much as possible, making the fixing effect of the first fixing member on the electrode terminal and the end cover more reliable and reducing variations in the level of compression of the sealing member so that higher sealing reliability is provided between the electrode terminal and end cover of the battery cell, thereby better ensuring the safety of the battery.

An embodiment of a third aspect of this application provides an electric apparatus including the battery cell according to the embodiment of the first aspect of this application, where the battery cell is configured to supply electrical energy.

For the electric apparatus according to the embodiment of the fourth aspect of this application, in an end cover assembly of a battery cell included therein, a sealing member is provided between an end cover and an electrode terminal to seal adjacent joint surfaces of the end cover and the electrode terminal, and the end cover is connected to a first fixing member surrounding a terminal plate so as to fix the electrode terminal onto the end cover. The first fixing member includes a first flange located on a side of the terminal plate farther away from the end cover, and a heat-resistant part is provided between the first flange and the electrode terminal in an axial direction of an electrode lead-out hole. The heat-resistant part is structurally less prone to damage and undergoes small changes in shape and size under heat conditions below its maximum heat-resistant temperature, and the first fixing member and the end cover are fixed in positions once connected. Therefore, the first flange is always spaced apart from the terminal plate by at least the thickness of the heat-resistant part; that is, the heat-resistant part restricts the distance that the terminal plate can move in the direction approaching the first flange. In this way, a mating position between the electrode terminal and the end cover can be kept unchanged as much as possible, making the fixing effect of the first fixing member on the electrode terminal and the end cover more reliable and reducing variations in the level of compression of the sealing member so that higher sealing reliability is provided between the electrode terminal and end cover of the battery cell, thereby better ensuring the safety of the electric apparatus.

### BRIEF DESCRIPTION OF DRAWINGS

To describe the technical solutions in the embodiments of this application or in the prior art more clearly, the following briefly describes the accompanying drawings required for describing the embodiments or the prior art. Apparently, the accompanying drawings in the following description show only some embodiments of this application, and persons of ordinary skill in the art may still derive other drawings from these accompanying drawings without creative efforts.
FIG. 1 is a schematic structural diagram of a vehicle according to some embodiments of this application;
FIG. 2 is a schematic structural exploded view of a battery according to some embodiments of this application;
FIG. 3 is a schematic structural exploded view of a battery cell according to some embodiments of this application;
FIG. 4 is a schematic structural diagram of an end cover assembly according to some embodiments of this application;
FIG. 5 is another schematic structural diagram of an end cover assembly according to some embodiments of this application; and
FIG. 6 is a schematic structural exploded view of an end cover assembly according to some embodiments of this application.

Reference signs in specific embodiments are as follows:
vehicle 1000; battery cell 700; controller 200; motor 300;
battery 7000; box 80; first portion 81; second portion 82;
electrode assembly 1100; housing 900;
end cover assembly 100;
end cover 2;
electrode terminal 1; terminal plate 12;
sealing member 3;
first fixing member 4; first flange 41; connection part 42; embedded through-hole 401;
heat-resistant part 5;
second fixing member 6; accommodation slot 61;
weld seam 400;
patch 7; and
insulator 8.

### DESCRIPTION OF EMBODIMENTS

The following describes in detail the embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by those skilled in the art to which this application relates. The terms used herein are intended to merely describe the specific embodiments rather than to limit this application. The terms "include", "comprise", "have", and any other variations thereof in the specification, claims and brief description of drawings of this application are intended to cover non-exclusive inclusions.

In the description of the embodiments of this application, the terms "first", "second", and the like are merely intended to distinguish between different objects, and shall not be understood as any indication or implication of relative importance or any implicit indication of the number, sequence or primary-secondary relationship of the technical features indicated. In the description of this application, "a plurality of' means at least two unless otherwise specifically stated.

In this specification, reference to "embodiment" means that specific features, structures or characteristics described with reference to the embodiment may be incorporated in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

In the description of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

In the description of the embodiments of this application, the term "a plurality of" means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal" "transverse", "length", "width", "height", "upper", "lower", "front", "rear", "left", "right", "vertical", "horizontal", "top", "bottom", "inside", "outside", "clockwise", "counterclockwise", "axial", "radial", "circumferential", and the like are based on the orientations or positional relationships as shown in the accompanying drawings. These terms are merely for ease and brevity of the description of the embodiments of this application rather than indicating or implying that the means or components mentioned must have specific orientations, or must be constructed or manipulated according to specific orientations, and therefore shall not be construed as any limitations on embodiments of this application.

In the description of the embodiments of this application, unless otherwise specified and defined explicitly, the terms "mounting", "connection", "join", and "fixing" should be understood in their general senses. For example, the terms may be a fixed connection, a detachable connection, or an integral connection, may be a mechanical connection or an electrical connection, and may be a direct connection, an indirect connection via an intermediate medium, internal communication between two elements, or interactions between two elements. Persons of ordinary skill in the art can understand specific meanings of these terms in this application as appropriate to specific situations.

An electrode terminal generally runs through a through-hole provided in an end cover. Additionally, an electrolyte is contained inside a battery cell, and to prevent electrolyte leakage, a sealing member needs to be provided for sealing between the end cover and the electrode terminal. The sealing between the end cover and the electrode terminal is an important key to ensure battery safety. Therefore, in some cases, solidified plastic is often used to fix the electrode terminal and the end cover to ensure that the sealing member between them maintains a certain level of compression, thereby achieving a better sealing effect.

The applicant has found that electrolyte leakage occurs at the position of the sealing member in the battery. Through analysis, the applicant has discovered that insufficient level of compression of the sealing member is the cause of the electrolyte leakage. Upon investigation, it was found that the plastic had undergone deformation, resulting in a decrease in the compression force of the plastic on the sealing member, leading to insufficient level of compression of the sealing member. Heat is generated during the plastic injection molding or in processes such as electrode terminal welding and formation, and the plastic is susceptible to thermal deformation, causing changes in the relative position between the electrode terminal and the end cover and resulting in sealing failure due to insufficient level of compression of the sealing member. Especially during battery transportation, vibration, charging, and discharging, loosening between the electrode terminal and the end cover is more likely to occur, resulting in battery sealing failure and subsequent electrolyte leakage, thereby posing a potential safety hazard for the battery.

In view of the above considerations, to solve the problem of low sealing reliability between the electrode terminal and the end cover, the applicant, after in-depth research, has proposed an end cover assembly with a fixing member connected to the end cover and configured to fix the electrode terminal onto the end cover and with a heat-resistant part provided between the fixing member and the electrode terminal. Due to a small coefficient of thermal expansion of the heat-resistant part (an amount of relative change in length or volume of a solid per 1 K rise in temperature), when the electrode terminal generates heat in processes such as welding and formation, the heat-resistant part can reduce the movement of the electrode terminal with respect to the fixing member. The fixing member is connected to the end cover, which can keep the positional distance between the electrode terminal and the end cover unchanged as much as possible, making the fixing effect of the first fixing member on the electrode terminal and the end cover more reliable and improving the sealing reliability between the electrode terminal and end cover.

An embodiment of this application provides an electric apparatus that uses battery cells as a power source. The electric apparatus may be but is not limited to a mobile phone, a tablet, a notebook computer, an electric toy, an electric tool, an electric bicycle, an electric car, a ship, and a spacecraft. The electric toy may be a fixed or mobile electric toy, for example, a game console, an electric toy car, an electric toy ship, and an electric toy airplane. The spacecraft may include an airplane, a rocket, a space shuttle, a spaceship, and the like.

For ease of description, the electric apparatus of an embodiment of this application being a vehicle 1000 is used as an example for description of the following embodiments.

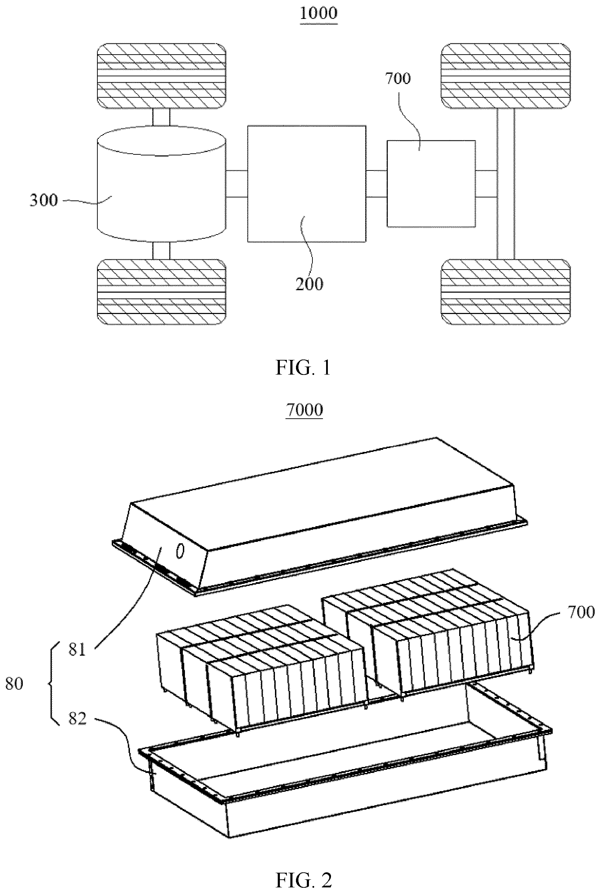

Refer to FIG. 1. FIG. 1 is a schematic structural diagram of a vehicle 1000 according to some embodiments of this application. The vehicle 1000 may be a fossil fuel vehicle, a natural-gas vehicle, or a new energy vehicle, where the new energy vehicle may be a battery electric vehicle, a hybrid electric vehicle, a range-extended vehicle, or the like. The vehicle 1000 is provided with battery cells 700 inside, and the battery cells 700 may be disposed at the bottom, front, or rear of the vehicle 1000. The battery cells 700 may be configured to supply power to the vehicle 1000. For example, the battery cell 700 may be used as an operational power source for the vehicle 1000. The vehicle 1000 may further include a controller 200 and a motor 300, where the controller 200 is configured to control the battery cells 700 to supply power to the motor 300, for example, to satisfy power needs of start, navigation, and driving of the vehicle 1000.

In some embodiments of this application, the battery cells 700 can be used as not only the operational power source for the vehicle 1000 but also a driving power source for the vehicle 1000, replacing or partially replacing fossil fuel or natural gas to provide driving traction for the vehicle 1000.

The battery mentioned in the embodiments of this application is a single physical module that includes one or more battery cells for providing a higher voltage and capacity.

Referring to FIG. 2, FIG. 2 is an exploded view of a battery 7000 according to some embodiments of this application. The battery 7000 may include a box 80 and battery cells 700, where the battery cells 700 is accommodated in the box 80. The box 80 is configured to provide an accommodating space for the battery cells 700. The box 80 may be a variety of structures. In some embodiments, the box 80 may include a first portion 81 and a second portion 82. The first portion 81 and the second portion 82 fit together so that the first portion 81 and the second portion 82 jointly define an accommodating space for accommodating the battery cells 700. The second portion 82 may be a hollow structure with one end open, and the first portion 81 may be a plate structure, where the first portion 81 covers the open side of the second portion 82 for the first portion 81 and the second portion 82 to jointly define an accommodating space. Alternatively, the first portion 81 and the second portion 82 may both be hollow structures with one side open, where the open side of the first portion 81 is engaged with the open side of the second portion 82. Certainly, the box 80 formed by the first portion 81 and the second portion 82 may have a variety of shapes, for example, cylinder or cuboid.

In the battery 7000, the battery cell 700 may be present in plurality, and the plurality of battery cells 700 may be connected in series, parallel, or series-parallel, where being connected in series-parallel means a combination of series and parallel connections of the plurality of battery cells 700. The plurality of battery cells 700 may be directly connected in series, parallel, or series-parallel, and then an entirety of the plurality of battery cells 700 is accommodated in the box 80; or certainly, the battery 7000 may be formed by a plurality of battery cells 700 connected in series, parallel, or series-parallel first to form a battery module and then a plurality of battery modules being connected in series, parallel, or series-parallel to form an entirety which is accommodated in the box 80. The battery 7000 may further include other structures. For example, the battery 7000 may further include a busbar configured to implement electrical connection between the plurality of battery cells 700.

Each battery cell 700 may be a secondary battery or a primary battery, and may be a lithium-sulfur battery, a sodium-ion battery, or a magnesium-ion battery, without being limited thereto. The battery cell 700 may be cylindrical, flat, cuboid, or of other shapes.

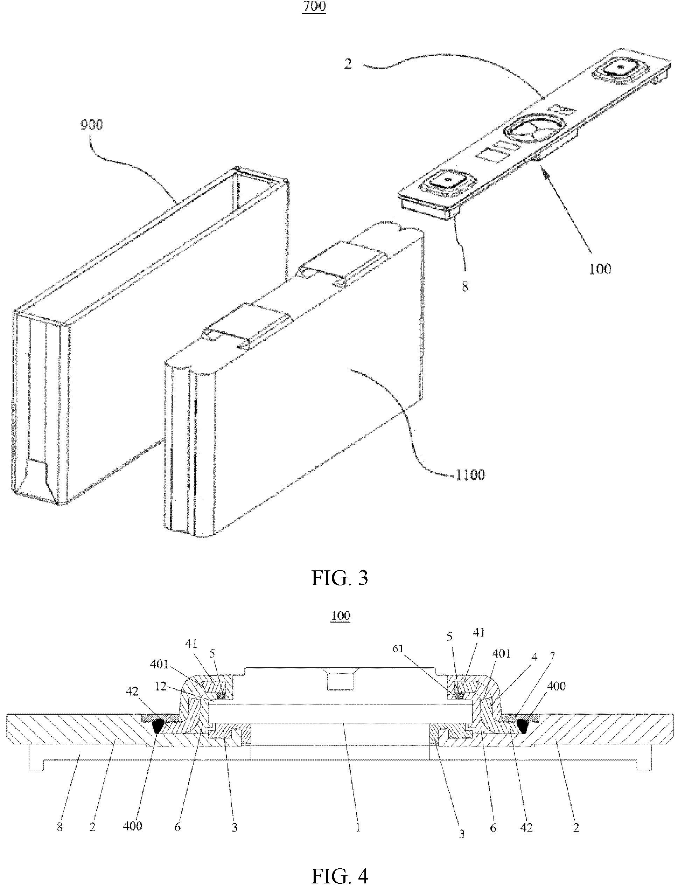

Refer to FIG. 3. FIG. 3 is a schematic structural exploded view of a battery cell 700 according to some embodiments of this application. The battery cell 700 refers to a smallest unit constituting a battery. As shown in FIG. 3, the battery cell 700 includes an end cover 2, a housing 900, and an electrode assembly 1100.

The end cover 2 refers to a component that covers an opening of the housing 900 to isolate an internal environment of the battery cell 700 from an external environment. The shape of the end cover 2 is not limited and may be adapted to the shape of the housing 900 to fit the housing 900. In some embodiments, the end cover 2 may be made of a material with given hardness and strength (for example, aluminum alloy), so that the end cover 2 is less likely to deform when subjected to extrusion and collision, allowing the battery cell 700 to have higher structural strength and enhanced safety performance. In some embodiments, the end cover 2 may be provided with functional components such as an electrode terminal. The electrode terminal may be configured to be electrically connected to the electrode assembly 1100 for outputting or inputting electrical energy of the battery cell 700. In some embodiments, the end cover 2 may further be provided with a pressure relief mechanism for releasing internal pressure when the internal pressure or a temperature of the battery cell 700 reaches a threshold. The end cover assembly 100 may also be made of various materials such as copper, iron, aluminum, stainless steel, aluminum alloy, and plastic, which are not particularly limited in the embodiments of this application. In some embodiments, as shown in FIG. 3, FIG. 4, and FIG. 6, an insulator 8 may also be provided inside the end cover 2, and the insulator 8 may be configured to isolate an electrical connection component in the housing 900 from the end cover 2 to reduce the risk of short circuit. For example, the insulator 8 may be made of plastic, a rubber, or the like.

The housing 900 is an assembly configured to form an internal environment of the battery cell 700 together with the end cover 2, where the formed internal environment may be configured to accommodate the electrode assembly 1100, an electrolyte, and other components. The housing 900 and the end cover 2 may be separate components, an opening may be provided on the housing 900, and the end cover 2 covers the opening to form the internal environment of the battery cell 700. Without limitation, the end cover 2 and the housing 900 may alternatively be integrated. Specifically, the end cover 2 and the housing 900 may form a shared connection surface before other components are disposed inside the housing. When the inside of the housing 900 needs to be enclosed, the housing 900 is covered with the end cover 2. The housing 900 may be a variety of shapes and sizes, such as a cuboid, a cylinder, and a hexagonal prism. Specifically, a shape of the housing 900 may be determined according to a specific shape and size of the electrode assembly 1100. The housing 900 may be made of various materials such as copper, iron, aluminum, stainless steel, aluminum alloy, and plastic, which are not particularly limited in the embodiments of this application.

The electrode assembly 1100 is a component in which electrochemical reactions occur in the battery cell 100. There may be one or more electrode assemblies 1100 in housing 900. The electrode assembly 1100 is mainly formed by winding or stacking a positive electrode plate and a negative electrode plate, and a separator is generally disposed between the positive electrode plate and the negative electrode plate. Portions of the positive electrode plate and the negative electrode plate with active substances constitute a body portion of the electrode assembly, while portions of the positive electrode plate and the negative electrode plate without active substances each constitute a tab. A positive electrode tab and a negative electrode tab may both be located at one end of the body portion or be located at two ends of the body portion respectively. During charging and discharging of the battery, a positive electrode active substance and a negative electrode active substance react with an electrolyte, and the tabs are connected to electrode terminals to form a current loop. Typically, the tabs are connected to the electrode terminals via the electrical connection component.

The end cover assembly disclosed in the embodiments of this application may be applied to the assembly of any battery cell, such as a cylindrical battery cell, a prismatic battery cell, or a soft pack battery cell, and the packaging method of battery cell is not limited in the embodiments of this application. The battery cell may be cylindrical, flat, cuboid, or of other shapes, which is not particularly limited in the embodiments of this application either. The battery cell in the embodiments of this application may be used without limitation in an electric apparatus such as a vehicle, a ship, or an aircraft. The application of the end cover assembly disclosed in the embodiments of this application isolates the internal environment of the battery cell from an external environment, which can better ensure the sealing of the battery cell, avoid leakage of the electrolyte inside the battery cell, and improve the safety of the battery.

As shown in FIG. 4 to FIG. 6, an embodiment of the first aspect of this application provides an end cover assembly 100 including an end cover 2, an electrode terminal 1, a sealing member 3, a first fixing member 4, and a heat-resistant part 5. The end cover 2 is provided with an electrode lead-out hole. The electrode terminal 1 includes a terminal plate 12, the terminal plate 12 is located on a side of the end cover 2 and covers the electrode lead-out hole, and an outer peripheral surface of the terminal plate 12 protrudes from an inner wall of the electrode lead-out hole. The sealing member 3 is at least partially disposed between the electrode terminal 1 and the end cover 2. The first fixing member 4 is configured to be connected to the end cover 2 and surround the terminal plate 12 so as to fix the electrode terminal 1 onto the end cover 2, where the first fixing member 4 includes a first flange 41, the first flange 41 extends in a direction approaching an axis of the electrode lead-out hole, and the first flange 41 is located on a side of the terminal plate 12 farther away from the end cover 2. At least a portion of the heat-resistant part 5 is located between the first flange 41 and the electrode terminal 1 in an axial direction of the electrode lead-out hole.

The end cover 2 can be understood as a structure that covers an opening of the housing of the battery cell and that is adapted to the shape of the housing so as to fit with the housing to form a space that can accommodate and confine the electrode assembly.

The electrode lead-out hole can be understood as a through-hole traversing from a surface of the end cover 2 toward the interior of the battery cell to another surface facing away from the interior of the battery cell.

The electrode terminal 1 may be understood as a structure electrically connected to the electrode assembly at one end and configured to be connected to a conductor external to the battery cell at another end for outputting or inputting electrical energy from the battery cell.

The terminal plate 12 can be understood as an electronic component protruding from the inside of the battery cell for electrical connection. In a case, the electrode terminal 1 may further include a post structure running through the electrode lead-out hole to limit the movement of the electrode terminal 1 along a radial direction of the electrode lead-out hole while facilitating electrical connection with the electrode assembly inside the battery cell. The outer peripheral surface of the terminal plate 12 can be understood as an edge circumference of a largest dimension portion of the terminal plate 12 in a direction perpendicular to the axis of the electrode lead-out hole.

The sealing member 3 may be understood as a material or part for preventing leakage of fluid or solid particles from between adjacent joining surfaces and preventing intrusion of external impurities such as dust and moisture into the interior of the battery cell. For example, the adjacent joint surfaces between the electrode terminal 1 and the end cover 2 may include two opposite surfaces of the terminal plate 12 and the end cover 2, an outer wall of the post structure, and an inner wall of the electrode lead-out hole. Typically, the sealing member 3 is made of a material with elasticity, such as rubber or silicone. To ensure a tight fit between the adjacent joint surfaces, the sealing member 3 is disposed between the adjacent joint surfaces so that the sealing member 3 maintains a certain level of compression, which can minimize gaps between the sealing member 3 and the adjacent joint surfaces, thereby improving the sealing effect on the adjacent joint surfaces.

The first fixing member 4 can be understood as a structure that has a specified hardness and rigidity and is capable of implementing compression between the terminal plate 12 and the end cover 2, and the first fixing member 4 and the end cover 2 are fixed in positions once connected.

The first flange 41 may be understood as a portion of an end of the first fixing member 4 that is opposite to an end of the end cover 2 and extends from outside of an outer peripheral surface of the terminal plate 12 to the center of the terminal plate 12, or as a portion of the first fixing member 4 that can provide a force that presses the terminal plate 12 toward the end cover 2 in a direction approaching the end cover 2 along the electrode lead-out hole. For example, the first fixing member 4 may be an annular structure made of metal, including a body adapted to the outer peripheral surface of the terminal plate 12. Accordingly, the first flange 41 can be understood as a structure extending from an end face of the body farther away from the end cover 2 in a direction approaching an axis of the electrode lead-out hole.

The heat-resistant part 5 can be understood as a material or part that can still maintain its excellent physical and mechanical properties under heated conditions, with its degree of heat resistance generally characterized by the maximum heat-resistant temperature of the material, and under heated conditions below the maximum heat-resistant temperature, the heat-resistant part 5 is structurally less prone to damage and undergoes small changes in shape and size.

For the end cover assembly 100 according to the embodiment of the first aspect of this application, the sealing member 3 is disposed between its end cover 2 and electrode terminal 1 to seal adjacent joint surfaces of the end cover 2 and the electrode terminal 1, and its end cover 2 is connected to the first fixing member 4 surrounding the terminal plate 12 to fix the electrode terminal 1 onto the end cover 2. The first fixing member 4 includes the first flange 41 located on a side of the terminal plate 12 farther away from the end cover 2, and the heat-resistant part 5 is disposed between the first flange 41 and the electrode terminal 1 in the axial direction of the electrode lead-out hole. The heat-resistant part 5 is structurally less prone to damage and undergoes small changes in shape and size under heat conditions below its maximum heat-resistant temperature, and the first fixing member 4 and the end cover 2 are fixed in positions once connected. Therefore, the first flange 41 is always spaced apart from the terminal plate 12 by at least the thickness of the heat-resistant part 5; that is, the heat-resistant part 5 restricts the distance that the terminal plate 12 can move in the direction approaching the first flange 41. In this way, a mating position between the electrode terminal 1 and the end cover 2 can be kept unchanged as much as possible, making the fixing effect of the first fixing member 4 on the electrode terminal 1 and the end cover 2 more reliable, reducing variations in the level of compression of the sealing member 3, and thereby improving the sealing reliability between the electrode terminal 1 and the end cover 2.

In some embodiments of this application, the heat-resistant part 5 is resistant to a temperature of at least 300 degrees Celsius (°C) without deformation.

That is, the maximum heat-resistant temperature of the heat-resistant part 5 is greater than 300°C. Under heated conditions below 300°C, the heat-resistant part 5 is structurally less prone to damage and undergoes small changes in shape and size.

Generally, if the electrode terminal 1 generates heat in processes such as welding and formation, temperatures on the surface of the electrode terminal 1 and in the surrounding environment are between 200°C and 300°C. The selection and use of a heat-resistant part 5 that is resistant to a temperature of at least 300°C without deformation can better limit the distance that the terminal plate 12 moves in the direction approaching the first flange 41 with higher reliability, thereby further guaranteeing the sealing between the electrode terminal 1 and the end cover 2.

In some embodiments of this application, the heat-resistant part 5 is made of at least one or more of the following materials: ceramics, polybenzimidazole, and polyimide.

Ceramics are materials or products made mainly from inorganic non-metallic minerals such as clay and various natural minerals through grinding, mixing, shaping, and calcination, and have good heat-resistance, with a maximum heat-resistant temperature of over 1000°C. Moreover, ceramics also have good insulation properties and remain non-conductive under allowable voltage. Using ceramics as a material for making the heat-resistant part 5 can ensure that the heat-resistant part 5 does not deformed when subjected to heat in processes such as welding and formation of the electrode terminals 1, and can also prevent potential safety hazards arising from electrical conduction between the electrode terminals 1 and the first flange 41.

Polybenzimidazole is a rigid chain polymer with a benzo five-membered heterocyclic ring containing two nitrogen atoms, and is generally formed by polycondensation and cyclization of aromatic tetramine and diphenyl terephthalate. The most prominent advantage of polybenzimidazole is its good heat resistance. For example, plastics reinforced with fibers woven from polybenzimidazole can be resistant to a temperature up to 300°C without deformation and have insulation properties, suitable as materials for making heat-resistant parts 5.

Polyimide refers to a type of polymer that contains an imide ring in its main chain, is one of organic polymer materials with excellent heat resistance, with a heat-resistant temperature of 400°C or more, and exhibits superior insulation and thermal insulation properties, capable of impeding or hindering the conduction of electric current and the transfer of heat. Using polyimide as a material for making the heat-resistant part 5 can further reduce the effect of temperature rise on the position of the electrode terminal 1, thereby improving the sealing reliability between the electrode terminal 1 and the end cover 2.

As can be seen, regardless of whether the heat-resistant part 5 is made of any one or more of ceramics, polybenzimidazole, and polyimide, the heat-resistant part 5 can satisfy the application requirement of low deformation in scenarios with elevated temperatures, and is disposed between the first flange 41 and the terminal plate 12 to limit the distance that the terminal plate 12 moves in the direction approaching the first flange 41, reducing the influence of the temperature rise on the position of the electrode terminal 1, reducing variations in the level of compression of the sealing member 3, and thereby improving the sealing reliability between the electrode terminal 1 and the end cover 2. In addition, the heat-resistant part also plays an insulating role to prevent potential safety hazards arising from electrical conduction between the electrode terminal 1 and the first flange 41.

In some embodiments of this application, as shown in FIG. 4, the end cover assembly 100 further includes a second fixing member 6, the second fixing member 6 at least partially surrounding the terminal plate 12, and the first fixing member 4 and the electrode terminal 1 are separated from each other by the second fixing member 6.

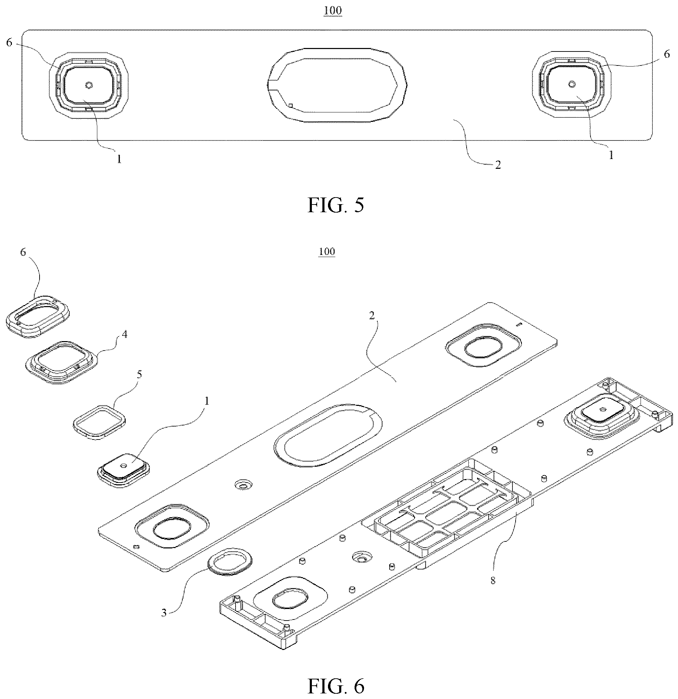

The second fixing member 6 can be understood as a structure that fills gaps between at least two parts to connect the at least two parts to form an entirety. For example, in a case as shown in FIG. 4 and FIG. 6, the first fixing member 4 may be provided on the first fixing member 4, with an embedded through-hole 401 running through a first side of the first fixing member 4 close to the terminal plate 12 and a second side of the first fixing member 4 farther away from the terminal plate 12, and a portion of the second fixing member 6 is embedded into the embedded through-hole 401. With the connection of the second fixing member 6 and the embedded through-hole 401 included in the first fixing member 4 in a mutually embedded manner, it is possible to improve the strength of the connection between the first fixing member 4 and the second fixing member 6, thereby making the connection between the first fixing member 4 and the second fixing member 6 less likely to be separated or loosened and further guaranteeing the stability of the connection between the terminal plate 12 and the end cover 2. In this case, the second fixing member 6 can be plastic. Plastic is mainly composed of carbon, oxygen, hydrogen, nitrogen, and other organic or inorganic elements, and its finished product is a solid, but plastic is a molten liquid in the manufacturing process. With advantages of meltability and moldability of plastics, plastic can be heated first and molten, and molten liquid plastic is injected from an end of the embedded through-hole 401 farther away from the terminal plate 12 and permeates between the first side of the first fixing member 4 close to the terminal plate 12 and the end cover 2 by leveraging its fluidity, that is, to fill gaps between the first fixing member 4 and the end cover 2 (including gaps between the first fixing member 4 and the terminal plate, gaps between the terminal plate 12 and the end cover 2, and the like). In this way, when the molten liquid plastic cools down and solidifies, a solid structure that can connect the first fixing member 4, the electrode terminal 1, and the end cover 2 is formed. The second fixing member 6 made using plastic in one injection molding process facilitates the connection between the second fixing member 6 and the first fixing member 4, the electrode terminal 1, and the end cover 2. Moreover, the plastic has good insulation properties, which can also prevent potential safety hazards arising from the electrical conduction between the electrode terminal 1 and the first fixing member 4.

The second fixing member 6 is disposed in such a manner that the second fixing member 6 at least partially surrounds the terminal plate 12 and separates the first fixing member 4 from the electrode terminal 1, so that the first fixing member 4 and the electrode terminal 1 are connected together to form an entirety, making them less likely to be separated from each other or loosened, thereby further strengthening the fixing effect on the electrode terminal 1 and the end cover 2 and improving the connection stability between the electrode terminal 1 and the end cover 2.

In some embodiments of this application, the second fixing member 6 is a heat-resistant part 5.

This can be understood that the second fixing member 6 and the heat-resistant part 5 are integrally molded as a whole structure. The second fixing member 6 possesses the characteristics, that the heat-resistant part 5 has, capable of still maintaining its excellent physical and mechanical properties under heated conditions. In addition, the second fixing member 6 at least partially surrounds the terminal plate 12 and separates the first fixing member 4 from the electrode terminal 1.

In this case, the spacing between the first fixing member 4 and the electrode terminal 1 is more stable, allowing for a smaller range of movement of the electrode terminal 1 in a direction approaching the first fixing member 4, thereby better guaranteeing the sealing reliability between the electrode terminal 1 and the end cover 2.

In some embodiments of this application, as shown in FIG. 4, the heat-resistant part 5 and the second fixing member 6 are disposed separately, where the heat-resistant part 5 is disposed between the first flange 41 and the electrode terminal 1, and the second fixing member 6 surrounds the heat-resistant part 5.

Since a movable direction of the electrode terminal 1 is the axial direction of the electrode lead-out hole, the key to limiting the movement distance of the electrode terminal 1 with respect to the first flange 41 is to dispose the heat-resistant part 5 between the first flange 41 and the electrode terminal 1. In this case, the heat-resistant part 5 is disposed separately from the second fixing member 6, and a selection range of materials for the second fixing member 6 is wider, making it easier to connect various components. In addition, the second fixing member 6 is disposed in a form surrounding the terminal plate 12 and the heat-resistant part 5 and separating the first fixing member 4 from the electrode terminal 1, so that the first fixing member 4, the heat-resistant part 5, and the electrode terminal 1 are connected together to form an entirety, making them less likely to be separated from each other or loosened. This further strengthens the fixing effect on the electrode terminal 1 and the end cover 2, improves the connection stability between the electrode terminal 1 and the end cover 2, and better guarantees the sealing reliability between the electrode terminal 1 and the end cover 2.

In some embodiments of this application, as shown in FIG. 4, a portion of the second fixing member 6 disposed between the first flange 41 and the terminal plate 12 is provided with an accommodation slot 61, and at least a portion of the heat-resistant part 5 is embedded in the accommodation slot 61.

The accommodation slot 61 can be understood as a cavity, a hole, or a slot for accommodating and mounting the connected parts.

With the provision of the accommodation slot 61 in the portion of the second fixing member 6 disposed between the first flange 41 and the terminal plate 12, at least a portion of the heat-resistant part 5 is embedded in the accommodation slot 61, which makes it easier to use the second fixing member 6 to surround at least a portion of the heat-resistant part 5, enhancing the connection stability between the heat-resistant part 5 and the first flange 41 and between the heat-resistant part 5 and the terminal plate 12 and avoiding displacement and shaking of the heat-resistant part 5 between the first flange 41 and the terminal plate 12 while such displacement and shaking affect the overall structural stability.

In some embodiments of this application, as shown in FIG. 4, along the axial direction of the electrode lead-out hole, the accommodation slot 61 runs through the portion of the second fixing member 6 disposed between the first flange 41 and the terminal plate 12 to enable two ends of the heat-resistant part 5 to abut against the first flange 41 and the terminal plate 12, respectively.

The accommodation slot 61 is configured as a through-hole running through the portion of the second fixing member 6 disposed between the first flange 41 and the terminal plate 12 to enable the two ends of the heat-resistant part 5 abut against the first flange 41 and the terminal plate 12, respectively, so that the movable distance of the electrode terminal 1 relative to the first flange 41 can be further reduced, guaranteeing a better fit between the electrode terminal 1 and the end cover 2, and improving the sealing reliability between the electrode terminal 1 and the end cover 2.

In some embodiments of this application, as shown in FIG. 6, the heat-resistant part 5 is an annular structure.

An annular structure can be understood as a closed structure formed by a circle around a circumference of a part. For example, as shown in FIG. 4, a boss protruding in a direction leaving the end cover 2 along the axis of the electrode lead-out hole is provided on a surface of the terminal plate 12 facing away from the end cover 2, to facilitate smoother electrical connection with an external conductor of the battery cell through the boss, where an edge circumference of the boss is closer to the axis of the electrode lead-out hole than the outer peripheral surface of the terminal plate 12 in the direction perpendicular to the axis of the electrode lead-out hole. In such a case, the heat-resistant part 5 is configured as a closed structure formed by a circle around the edge circumference of the boss, that is, an annular structure disposed on a surface of the terminal plate 12 facing away from the end cover 2 and adapted to the boss.

With the heat-resistant part 5 configured as an annular structure, the overall movable distance of the electrode terminal 1 relative to the first flange 41 remains consistent. This prevents the occurrence of misalignment of the axis of the electrode terminal 1, can guarantee a better fit between the electrode terminal 1 and the end cover 2, and improve the sealing reliability between the electrode terminal 1 and the end cover 2.

In some embodiments of this application, the heat-resistant part 5 is provided in plurality, and the plurality of heat-resistant parts 5 are spaced apart in a direction surrounding the axis of the electrode terminal 1.

With the provision of the plurality of heat-resistant parts 5 spaced apart in the direction surrounding the axis of the electrode terminal 1, it is possible to limit the overall movable distance of the electrode terminal 1 relative to the first flange 41 to remain consistent, preventing the occurrence of misalignment of the axis of the electrode terminal 1, so as to guarantee a better fit between the electrode terminal 1 and the end cover 2 and improve the sealing reliability between the electrode terminal 1 and the end cover 2. In addition, the material usage of the heat-resistant part 5 can also be reduced, thereby reducing economic costs of producing the heat-resistant part 5.

In some embodiments of this application, as shown in FIG. 4, the first fixing member 4 further includes a connection part 42 extending in a direction leaving the terminal plate 12, the connection part 42 being welded to the end cover 2; and the end cover assembly 100 further includes a patch 7, the patch 7 covering a weld seam 400 formed by welding of the connection part 42 to the end cover 2.

The connection part 42 can be understood as an end portion of the first fixing member 4 for connecting to the end cover 2. As in the example given above in describing the first flange 41, the first fixing member 4 may be an annular structure made of metal, including a body adapted to the outer peripheral surface of the terminal plate 12. Accordingly, the first flange 41 can be understood as a structure extending from an end face of the body farther away from the end cover 2 in a direction approaching an axis of the electrode lead-out hole, while the connection part 42 can be understood as a structure extending from an end face of the body close to the end cover 2 in a direction leaving the terminal plate 12.

The weld seam 400 refers to a ridge or protrusion formed by melting and joining the metal at the connection between the connection part 42 and the end cover 2 using heat from a welding heat source. Due to a metal material at the connection between the connection part 42 and the end cover 2, and manual characteristics during the welding process, the structure and shape of the weld seam 400 vary.

The patch 7 can be understood as a sheet-like structure capable of being adhered to a surface of a part. In the embodiments of this application, since the patch 7 covers the weld seam 400 formed by welding the connection part 42 and the end cover 2, the patch 7 can be made of insulating materials (such as silicone, rubber, plastic, or the like), to prevent potential safety hazards arising from electrical conduction with an environment outside the battery cell when there is an electric leakage at the connection between the connection part 42 and the end cover 2.

With the provision of the connection part 42 to implement the connection between the first fixing member 4 and the end cover 2 by welding the connection part 42 to the end cover 2, it is easier to fix the position of the first fixing member 4. In addition, the provision of the patch 7 over the weld seam 400 formed by welding of the connection part 42 to the end cover 2 can prevent the weld seam 400 from being exposed on the surface of the battery cell, thereby improving the aesthetics of the overall structure.

In some embodiments of this application, as shown in FIG. 4 to FIG. 6, the end cover assembly 100 includes the end cover 2, the electrode terminal 1, the sealing member 3, the first fixing member 4, the heat-resistant part 5, and the second fixing member 6. The end cover 2 is provided with an electrode lead-out hole. The electrode terminal 1 includes a terminal plate 12, the terminal plate 12 is located on a side of the end cover 2 and covers the electrode lead-out hole, and an outer peripheral surface of the terminal plate 12 protrudes from an inner wall of the electrode lead-out hole. The sealing member 3 is at least partially disposed between the electrode terminal 1 and the end cover 2. The first fixing member 4 is configured to be connected to the end cover 2 and surround the terminal plate 12 to fix the electrode terminal 1 onto the end cover 2, where the first fixing member 4 includes a first flange 41, the first flange 41 extends in a direction approaching an axis of the electrode lead-out hole, and the first flange 41 is located on a side of the terminal plate 12 farther away from the end cover 2. The heat-resistant part 5 is made of at least one or more of the following materials: ceramics, polybenzimidazole, and polyimide. At least a portion of the heat-resistant part 5 is located between the first flange 41 and the electrode terminal 1 in an axial direction of the electrode lead-out hole. The second fixing member 6 at least partially surrounds the terminal plate 12 and surrounds the heat-resistant part 5. The first fixing member 4 and the electrode terminal 1 are separated from each other by the second fixing member 6. A portion of the second fixing member 6 disposed between the first flange 41 and the terminal plate 12 is provided with an accommodation slot 61, and at least a portion of the heat-resistant part 5 is embedded in the accommodation slot 61. The accommodation slot 61 runs through the portion of the second fixing member 6 disposed between the first flange 41 and the terminal plate 12 to enable two ends of the heat-resistant part 5 to abut against the first flange 41 and the terminal plate 12, respectively.

For the end cover assembly 100 according to the embodiments of this application, the sealing member 3 is provided between the end cover 2 and electrode terminal 1 of the end cover assembly 100 to seal adjacent joint surfaces of the end cover 2 and the electrode terminal 1, and the end cover 2 of the end cover assembly 100 is connected to the first fixing member 4 surrounding the terminal plate 12 so as to fix the electrode terminal 1 onto the end cover 2. The first fixing member 4 includes the first flange 41 located on a side of the terminal plate 12 farther away from the end cover 2, and the heat-resistant part 5 is provided between the first flange 41 and the electrode terminal 1 in the axial direction of the electrode lead-out hole. The second fixing member 6 at least partially surrounds the terminal plate 12 and surrounds the heat-resistant part 5, and two ends of the heat-resistant part 5 abut against the first flange 41 and the terminal plate 12, respectively. The heat-resistant part 5 is structurally less prone to damage and undergoes small changes in shape and size under heat conditions below its maximum heat-resistant temperature, and the first fixing member 4 and the end cover 2 are fixed in positions once connected. Therefore, the first flange 41 is always spaced apart from the terminal plate 12 by the thickness of the heat-resistant part 5; that is, the heat-resistant part 5 restricts the distance that the terminal plate 12 can move in the direction approaching the first flange 41. In this way, a mating position between the electrode terminal 1 and the end cover 2 can be kept unchanged as much as possible, making the fixing effect of the first fixing member 4 on the electrode terminal 1 and the end cover 2 more reliable, reducing variations in the level of compression of the sealing member 3, and thereby improving the sealing reliability between the electrode terminal 1 and the end cover 2. Furthermore, regardless of whether the heat-resistant part 5 is made of any one or more of ceramics, polybenzimidazole, and polyimide, the heat-resistant part 5 can satisfy the application requirement of low deformation in temperature rising scenarios, and is disposed between the first flange 41 and the terminal plate 12 to limit the distance that the terminal plate 12 moves in the direction approaching the first flange 41, reducing the influence of the temperature rise on the position of the electrode terminal 1, reducing variations in the level of compression of the sealing member 3, and thereby improving the sealing reliability between the electrode terminal 1 and the end cover 2. In addition, the heat-resistant part also plays an insulating role to prevent potential safety hazards arising from electrical conduction between the electrode terminal 1 and the first flange 41. The second fixing member 6 is disposed in a form surrounding the terminal plate 12 and the heat-resistant part 5 and separating the first fixing member 4 from the electrode terminal 1, so that the first fixing member 4, the heat-resistant part 5, and the electrode terminal 1 are connected together to form an entirety, making them less likely to be separated from each other or loosened. This can also further strengthen the fixing effect on the electrode terminal 1 and the end cover 2, thereby better guaranteeing the sealing reliability between the electrode terminal 1 and the end cover 2.

As shown in FIG. 3, an embodiment of the second aspect of this application provides a battery cell including a housing 900, an electrode assembly 1100, and the end cover assembly 100 according to the embodiment of the first aspect of this application. The housing 900 has an opening, the electrode assembly 1100 is accommodated in the housing 900, and the end cover assembly 100 covers the opening.

The housing 900 can be understood as an assembly configured to cooperate with the end cover assembly 100 to form an internal environment of the battery cell, where the formed internal environment can be used to accommodate the electrode assembly 1100, an electrolyte, and other components. The housing 900 may be of various shapes and sizes, such as a cuboid shape, a cylindrical shape, and a hexagonal prism shape. This is not limited in this embodiment of this application. For example, in a case, a shape of the housing 900 may be determined according to a specific shape and size of the electrode assembly 1100. The housing 900 may be made of one or more materials such as copper, iron, aluminum, stainless steel, aluminum alloy, and plastic, which are not particularly limited in this embodiment of this application either.

The electrode assembly 1100 is a component in the battery cell in which electrochemical reactions occur, mainly formed by winding or stacking a positive electrode plate and a negative electrode plate, and a separator is generally disposed between the positive electrode plate and the negative electrode plate. The housing 900 may include one or more electrode assemblies 1100.

The battery cell disclosed in the embodiments of this application may be used without limitation in a device or system such as a vehicle, a ship, or an aircraft. The battery cell may be a secondary battery or a primary battery, and may be a lithium-sulfur battery, a sodium-ion battery, or a magnesium-ion battery, without being limited thereto. The battery cell may include a lithium-ion secondary battery, a lithium-ion primary battery, a lithium-sulfur battery, a sodium-lithium-ion battery, a sodium-ion battery, a magnesium-ion battery, or the like. This is not limited in the embodiments of this application. The shape of the battery cell may be cylindrical, flat, cuboid, or another shape. This is not limited in the embodiments of this application either.

For the battery cell according to the embodiment of the second aspect of this application, a sealing member 3 is provided between an end cover 2 and electrode terminal 1 of its end cover assembly 100 to seal adjacent joint surfaces of the end cover 2 and the electrode terminal 1, and the end cover 2 is connected to a first fixing member 4 surrounding a terminal plate 12 to fix the electrode terminal 1 onto the end cover 2. The first fixing member 4 includes a first flange 41 located on a side of the terminal plate 12 farther away from the end cover 2, and a heat-resistant part 5 is provided between the first flange 41 and the electrode terminal 1 in an axial direction of an electrode lead-out hole. The heat-resistant part 5 is structurally less prone to damage and undergoes small changes in shape and size under heat conditions below its maximum heat-resistant temperature, and the first fixing member 4 and the end cover 2 are fixed in positions once connected. Therefore, the first flange 41 is always spaced apart from the terminal plate 12 by at least the thickness of the heat-resistant part 5; that is, the heat-resistant part 5 restricts the distance that the terminal plate 12 can move in the direction approaching the first flange 41. In this way, a mating position between the electrode terminal 1 and the end cover 2 can be kept unchanged as much as possible, making the fixing effect of the first fixing member 4 on the electrode terminal 1 and the end cover 2 more reliable, reducing variations in the level of compression of the sealing member 3, and thereby improving the sealing reliability between the electrode terminal 1 and the end cover 2 and better ensuring the safety of the battery cell.

An embodiment of a third aspect of this application provides a battery including the battery cell according to the embodiment of the second aspect of this application.

The battery disclosed in this embodiment of this application is a single physical module that includes one or more battery cells for providing a higher voltage and capacity. For example, if the battery can include a plurality of battery cells, the plurality of battery cells may be directly connected in series, parallel, or series-parallel, and then an entirety of the plurality of battery cells is accommodated in the box, where being connected in series-parallel means a combination of series and parallel connections of the plurality of battery cells. Certainly, the battery may be formed by a plurality of battery cells being connected in series, parallel, or series-parallel first to form a battery module and then a plurality of battery modules being connected in series, parallel, or series-parallel to form an entirety which is accommodated in the box.

For the battery according to the embodiment of the third aspect of this application, in an end cover assembly 100 of a battery cell included therein, a sealing member 3 is provided between an end cover 2 and an electrode terminal 1 to seal adjacent joint surfaces of the end cover 2 and the electrode terminal 1, and the end cover 2 is connected to a first fixing member 4 surrounding a terminal plate 12 to fix the electrode terminal 1 onto the end cover 2. The first fixing member 4 includes a first flange 41 located on a side of the terminal plate 12 farther away from the end cover 2, and a heat-resistant part 5 is provided between the first flange 41 and the electrode terminal 1 in an axial direction of an electrode lead-out hole. The heat-resistant part 5 is structurally less prone to damage and undergoes small changes in shape and size under heat conditions below its maximum heat-resistant temperature, and the first fixing member 4 and the end cover 2 are fixed in positions once connected. Therefore, the first flange 41 is always spaced apart from the terminal plate 12 by at least the thickness of the heat-resistant part 5; that is, the heat-resistant part 5 restricts the distance that the terminal plate 12 can move in the direction approaching the first flange 41. In this way, a mating position between the electrode terminal 1 and the end cover 2 can be kept unchanged as much as possible, making the fixing effect of the first fixing member 4 on the electrode terminal 1 and the end cover 2 more reliable, and reducing variations in the level of compression of the sealing member 3 so that higher sealing reliability is provided between the electrode terminal 1 and end cover 2 of the battery cell, thereby better ensuring the safety of the battery.

An embodiment of a fourth aspect of this application provides an electric apparatus including the battery cell according to the embodiment of the second aspect of this application, where the battery cell is configured to supply electrical energy.

The electric apparatus may be any one of the foregoing devices or systems using a battery cell.

For the electric apparatus according to the embodiment of the fourth aspect of this application, in an end cover assembly 100 of a battery cell included therein, a sealing member 3 is provided between an end cover 2 and an electrode terminal 1 to seal adjacent joint surfaces of the end cover 2 and the electrode terminal 1, and the end cover 2 is connected to a first fixing member 4 surrounding a terminal plate 12 to fix the electrode terminal 1 onto the end cover 2. The first fixing member 4 includes a first flange 41 located on a side of the terminal plate 12 farther away from the end cover 2, and a heat-resistant part 5 is provided between the first flange 41 and the electrode terminal 1 in an axial direction of an electrode lead-out hole. The heat-resistant part 5 is structurally less prone to damage and undergoes small changes in shape and size under heat conditions below its maximum heat-resistant temperature, and the first fixing member 4 and the end cover 2 are fixed in positions once connected. Therefore, the first flange 41 is always spaced apart from the terminal plate 12 by at least the thickness of the heat-resistant part 5; that is, the heat-resistant part 5 restricts the distance that the terminal plate 12 can move in the direction approaching the first flange 41. In this way, a mating position between the electrode terminal 1 and the end cover 2 can be kept unchanged as much as possible, making the fixing effect of the first fixing member 4 on the electrode terminal 1 and the end cover 2 more reliable, and reducing variations in the level of compression of the sealing member 3 so that higher sealing reliability is provided between the electrode terminal 1 and end cover 2 of the battery cell, thereby better ensuring the safety of the electric apparatus.

It should be noted that the above embodiments are merely intended for describing the technical solutions of this application but not for limiting this application. Although this application is described in detail with reference to the foregoing embodiments, persons of ordinary skill in the art should understand that they may still make modifications to the technical solutions described in the foregoing embodiments without departing from the scope of the technical solutions of the embodiments of this application. In particular, as long as there is no structural conflict, the various technical features mentioned in the embodiments can be combined in any manner. This application is not limited to the specific embodiments disclosed in this specification but includes all technical solutions falling within the scope of the claims.

It should be noted that relational terms such as "first" and "second" are only used to distinguish one entity or operation from another entity or operation, and do not necessarily require or imply that there is any such actual relationship or order between these entities or operations. Terms "comprise", "include", or any other variations thereof are intended to cover non-exclusive inclusions, such that a process, method, article or device including a series of elements not only includes these elements, but also includes other elements which are not expressly listed, or further includes elements which are inherent to such process, method, article or device. Under the condition of no more limitations, an element defined by the statement "including one..." does not exclude existence of the same other elements in a process, a method, an article or a device including the element.

The embodiments in this application are all described in a related manner, for same or similar parts in the embodiments, reference may be made to these embodiments, and each embodiment focuses on a difference from other embodiments.

The foregoing descriptions are merely preferred examples of this application, and are not intended to limit the protection scope of this application. Any modification, equivalent replacement, improvement, or the like made without departing from the spirit and principle of this application shall fall within the protection scope of this application.

## Claims

1. A battery cell, comprising:
a housing (900) with an opening;
an electrode assembly (1100) accommodated in the housing (900);
an end cover assembly (100) covering the opening, wherein the end cover assembly (100) comprising:
an end cover (2), provided with an electrode lead-out hole;
an electrode terminal (1), wherein the electrode terminal (1) comprises a terminal plate (12), the terminal plate (12) is located on a side of the end cover (2) and covers the electrode lead-out hole, and an outer peripheral surface of the terminal plate (12) protrudes from an inner wall of the electrode lead-out hole;
a sealing member (3), at least partially disposed between the electrode terminal (1) and the end cover (2);
a first fixing member (4) configured to be connected to the end cover (2) and surround the terminal plate (12) so as to fix the electrode terminal (1) onto the end cover (2), wherein the first fixing member (4) comprises a first flange (41), the first flange (41) extends in a direction approaching an axis of the electrode lead-out hole, and the first flange (41) is located on a side of the terminal plate (12) farther away from the end cover (2); and
a heat-resistant part (5), at least a portion of the heat-resistant part (5) being located between the first flange (41) and the electrode terminal (1) in an axial direction of the electrode lead-out hole;
wherein the end cover assembly (100) further comprises a second fixing member (6), the second fixing member (6) at least partially surrounding the terminal plate (12), and the first fixing member (4) and the electrode terminal (1) are separated from each other by the second fixing member (6);
**characterized in that**
a portion of the second fixing member (6) located between the first flange (41) and the terminal plate (12) is provided with an accommodation slot (61) and at least a portion of the heat-resistant part (5) is embedded in the accommodation slot (61); and
wherein along the axial direction of the electrode lead-out hole, the accommodation slot (61) runs through the portion of the second fixing member (6) located between the first flange (41) and the terminal plate (12) so as to enable two ends of the heat-resistant part (5) to abut against the first flange (41) and the terminal plate (12), respectively.

2. The battery cell according to claim 1, wherein the heat-resistant part (5) is resistant to a temperature of at least 300°C without deformation.

3. The battery cell according to claim 2, wherein the heat-resistant part (5) is made of at least one or more of the following materials: ceramics, polybenzimidazole, and polyimide.

4. The battery cell according to any one of claims 1 to 3, wherein the second fixing member (6) is the heat-resistant part (5).

5. The battery cell according to any one of claims 1 to 3, wherein the heat-resistant part (5) is provided separately from the second fixing member (6), wherein the heat-resistant part (5) is provided between the first flange (41) and the electrode terminal (1) and the second fixing member (6) surrounds the heat-resistant part (5).

6. The battery cell according to any one of claims 1 to 5, wherein the heat-resistant part (5) is an annular structure.

7. The battery cell according to any one of claims 1 to 5, wherein the heat-resistant part (5) is provided in plurality, and the plurality of heat-resistant parts (5) are spaced apart in a direction surrounding the axis of the electrode terminal (1).

8. The battery cell according to any one of claims 1 to 7, wherein the first fixing member (4) further comprises a connection part (42) extending in a direction leaving the terminal plate (12), the connection part (42) being welded to the end cover (2); and the end cover assembly (100) further comprises a patch (7), the patch (7) covering a weld seam (400) formed by welding of the connection part (42) to the end cover (2).

9. A battery, comprising the battery cell according to any of claims 1-8.

10. An electric apparatus, comprising the battery cell according to any of claims 1-8, wherein the battery cell is configured to supply electrical energy.

## Patentansprüche

1. Batteriezelle, die Folgendes umfasst:
ein Gehäuse (900) mit einer Öffnung;
eine Elektrodenanordnung (1100), die in dem Gehäuse (900) aufgenommen ist;
eine Endabdeckungsanordnung (100), die die Öffnung bedeckt, wobei die Endabdeckungsanordnung (100) Folgendes umfasst:
eine Endabdeckung (2), die mit einem Elektrodenherausführungsloch versehen ist;
einen Elektrodenanschluss (1), wobei der Elektrodenanschluss (1) eine Anschlussplatte (12) umfasst, wobei sich die Anschlussplatte (12) auf einer Seite der Endabdeckung (2) befindet und das Elektrodenherausführungsloch bedeckt und wobei eine Außenumfangsfläche der Anschlussplatte (12) von einer Innenwand das Elektrodenherausführungslochs vorsteht;
ein Dichtungselement (3), das wenigstens teilweise zwischen dem Elektrodenanschluss (1) und der Endabdeckung (2) angeordnet ist;
ein erstes Befestigungselement (4), das konfiguriert ist, mit der Endabdeckung (2) verbunden zu sein und die Anschlussplatte (12) zu umgeben, um den Elektrodenanschluss (1) an der Endabdeckung (2) zu befestigen, wobei das erste Befestigungselement (4) einen ersten Flansch (41) umfasst, wobei der erste Flansch (41) in einer Richtung der Annäherung an eine Achse des Elektrodenherausführungslochs verläuft und wobei sich der erste Flansch (41) auf einer Seite der Anschlussplatte (12), die von der Endabdeckung (2) weiter entfernt ist, befindet; und
ein wärmebeständiges Teil (5), wobei sich wenigstens ein Abschnitt des wärmebeständigen Teils (5) in einer Axialrichtung des Elektrodenherausführungslochs zwischen dem ersten Flansch (41) und dem Elektrodenanschluss (1) befindet;
wobei die Endabdeckungsanordnung (100) ferner ein zweites Befestigungselement (6) umfasst, wobei das zweite Befestigungselement (6) die Anschlussplatte (12) wenigstens teilweise umgibt und wobei das erste Befestigungselement (4) und der Elektrodenanschluss (1) durch das zweite Befestigungselement (6) voneinander getrennt sind;
**dadurch gekennzeichnet, dass**
ein Abschnitt des zweiten Befestigungselements (6), der sich zwischen dem ersten Flansch (41) und der Anschlussplatte (12) befindet, mit einem Aufnahmeschlitz (61) versehen ist und wenigstens ein Abschnitt des wärmebeständigen Teils (5) in den Aufnahmeschlitz (61) eingebettet ist; und
wobei der Aufnahmeschlitz (61) entlang der Axialrichtung des Elektrodenherausführungslochs durch den Abschnitt des zweiten Befestigungselements (6), der sich zwischen dem ersten Flansch (41) und der Anschlussplatte (12) befindet, verläuft, um zu ermöglichen, dass zwei Enden des wärmebeständigen Teils (5) an dem ersten Flansch (41) bzw. an der Anschlussplatte (12) anliegen.

2. Batteriezelle nach Anspruch 1, wobei das wärmebeständige Teil (5) für eine Temperatur von wenigstens 300 °C ohne Verformung beständig ist.

3. Batteriezelle nach Anspruch 2, wobei das wärmebeständige Teil (5) wenigstens aus einem oder aus mehreren der folgenden Materialien hergestellt ist: Keramik, Polybenzimidazol und Polyimid.

4. Batteriezelle nach einem der Ansprüche 1 bis 3, wobei das zweite Befestigungselement (6) das wärmebeständige Teil (5) ist.

5. Batteriezelle nach einem der Ansprüche 1 bis 3, wobei das wärmebeständige Teil (5) von dem zweiten Befestigungselement (6) getrennt vorgesehen ist, wobei das wärmebeständige Teil (5) zwischen dem ersten Flansch (41) und dem Elektrodenanschluss (1) vorgesehen ist und wobei das zweite Befestigungselement (6) das wärmebeständige Teil (5) umgibt.

6. Batteriezelle nach einem der Ansprüche 1 bis 5, wobei das wärmebeständige Teil (5) eine ringförmige Struktur ist.

7. Batteriezelle nach einem der Ansprüche 1 bis 5, wobei das wärmebeständige Teil (5) in einer Mehrzahl vorgesehen ist und wobei die Mehrzahl wärmebeständiger Teile (5) in einer Richtung, die die Achse des Elektrodenanschlusses (1) umgibt, voneinander beabstandet sind.

8. Batteriezelle nach einem der Ansprüche 1 bis 7, wobei das erste Befestigungselement (4) ferner ein Verbindungsteil (42) umfasst, das in einer Richtung, die die Anschlussplatte (12) verlässt, verläuft, wobei das Verbindungsteil (42) an die Endabdeckung (2) geschweißt ist; und wobei die Endabdeckungsanordnung (100) ferner ein Füllstück (7) umfasst, wobei das Füllstück (7) eine Schweißnaht (400) bedeckt, die durch Schweißen des Verbindungsteils (42) an die Endabdeckung (2) gebildet ist.

9. Batterie, die die Batteriezelle nach einem der Ansprüche 1-8 umfasst.

10. Elektrische Vorrichtung, die die Batteriezelle nach einem der Ansprüche 1-8 umfasst, wobei die Batteriezelle zum Zuführen elektrischer Energie konfiguriert ist.

## Revendications

1. Cellule de batterie, comprenant :
un boîtier (900) doté d'une ouverture ;
un ensemble d'électrodes (1100) logé dans le boîtier (900) ;
un ensemble de couvercle d'extrémité (100) recouvrant l'ouverture, l'ensemble de couvercle d'extrémité (100) comprenant :
un couvercle d'extrémité (2), pourvu d'un orifice de sortie d'électrode ;
une borne d'électrode (1), la borne d'électrode (1) comprenant une plaque de borne (12), la plaque de borne (12) étant située sur un côté du couvercle d'extrémité (2) et recouvrant l'orifice de sortie d'électrode, et une surface périphérique extérieure de la plaque de borne (12) faisant saillie par rapport à une paroi intérieure de l'orifice de sortie d'électrode ;
un élément d'étanchéité (3), disposé au moins partiellement entre la borne d'électrode (1) et le couvercle d'extrémité (2) ;
un premier élément de fixation (4) configuré pour être relié au couvercle d'extrémité (2) et entourer la plaque de borne (12) de manière à fixer la borne d'électrode (1) sur le couvercle d'extrémité (2), le premier élément de fixation (4) comprenant une première bride (41), la première bride (41) s'étendant dans une direction se rapprochant d'un axe de l'orifice de sortie d'électrode, et la première bride (41) étant située sur un côté de la plaque de borne (12) plus éloigné du couvercle d'extrémité (2) ; et
une pièce résistante à la chaleur (5), au moins une partie de la pièce résistante à la chaleur (5) étant située entre la première bride (41) et la borne d'électrode (1) dans une direction axiale de l'orifice de sortie d'électrode ;
l'ensemble de couvercle d'extrémité (100) comprenant en outre un deuxième élément de fixation (6), le deuxième élément de fixation (6) entourant au moins partiellement la plaque de borne (12), et le premier élément de fixation (4) et la borne d'électrode (1) étant séparés l'un de l'autre par le deuxième élément de fixation (6) ;
**caractérisée en ce que**
une partie du deuxième élément de fixation (6) située entre la première bride (41) et la plaque de borne (12) est pourvue d'une rainure de logement (61) et au moins une partie de la pièce résistante à la chaleur (5) est noyée dans la rainure de logement (61) ; et
dans laquelle, selon la direction axiale de l'orifice de sortie d'électrode, la rainure de logement (61) s'étend à travers la partie du deuxième élément de fixation (6) située entre la première bride (41) et la plaque de borne (12) de manière à permettre à deux extrémités de la pièce résistante à la chaleur (5) de venir en appui respectivement contre la première bride (41) et contre la plaque de borne (12).

2. Cellule de batterie selon la revendication 1, dans laquelle la pièce résistante à la chaleur (5) résiste à une température d'au moins 300 °C sans déformation.

3. Cellule de batterie selon la revendication 2, dans laquelle la pièce résistante à la chaleur (5) est constituée d'au moins l'un des matériaux suivants : céramiques, polybenzimidazole et polyimide.

4. Cellule de batterie selon l'une quelconque des revendications 1 à 3, dans laquelle le deuxième élément de fixation (6) est la pièce résistante à la chaleur (5).

5. Cellule de batterie selon l'une quelconque des revendications 1 à 3, dans laquelle la pièce résistante à la chaleur (5) est disposée séparément du deuxième élément de fixation (6), la pièce résistante à la chaleur (5) étant disposée entre la première bride (41) et la borne d'électrode (1) et le deuxième élément de fixation (6) entourant la pièce résistante à la chaleur (5).

6. Cellule de batterie selon l'une quelconque des revendications 1 à 5, dans laquelle la pièce résistante à la chaleur (5) est une structure annulaire.

7. Cellule de batterie selon l'une quelconque des revendications 1 à 5, dans laquelle la pièce résistante à la chaleur (5) est présente en pluralité, et la pluralité de pièces résistantes à la chaleur (5) sont espacées dans une direction entourant l'axe de la borne d'électrode (1).

8. Cellule de batterie selon l'une quelconque des revendications 1 à 7, dans laquelle le premier élément de fixation (4) comprend en outre une pièce de liaison (42) s'étendant dans une direction partant de la plaque de borne (12), la pièce de liaison (42) étant soudée au couvercle d'extrémité (2) ; et l'ensemble de couvercle d'extrémité (100) comprend en outre une pièce rapportée (7), la pièce rapportée (7) recouvrant un cordon de soudure (400) formé par soudage de la pièce de liaison (42) au couvercle d'extrémité (2).

9. Batterie, comprenant la cellule de batterie selon l'une quelconque des revendications 1 à 8.

10. Appareil électrique, comprenant la cellule de batterie selon l'une quelconque des revendications 1 à 8, la cellule de batterie étant configurée pour fournir de l'énergie électrique.
